(19) Europäisches Patentamt
European Patent Office
Office européen des brevets

(11) Veröffentlichungsnummer: **0 224 111**
**A2**

(12) **EUROPÄISCHE PATENTANMELDUNG**

(21) Anmeldenummer: 86115594.3

(22) Anmeldetag: 11.11.86

(51) Int.Cl.⁴: C 08 L 69/00
C 08 L 55/00, C 08 L 51/04
C 08 L 25/00

(30) Priorität: 23.11.85 DE 3541406

(43) Veröffentlichungstag der Anmeldung: 03.06.87 Patentblatt 87/23

(84) Benannte Vertragsstaaten: DE ES FR GB IT NL

(71) Anmelder: BAYER AG
Konzernverwaltung RP Patentabteilung
D-5090 Leverkusen 1 Bayerwerk(DE)

(72) Erfinder: Kress, Hans-Jürgen, Dr.
Scheiblerstrasse 111
D-4150 Krefeld(DE)

(72) Erfinder: Tacke, Peter, Dr.
Brandenburger Strasse 12
D-4150 Krefeld(DE)

(72) Erfinder: Freitag, Dieter, Dr.
Hasenheide 10
D-4150 Krefeld(DE)

(72) Erfinder: Ott, Karl-Heinz, Dr.
Paul-Klee-Strasse 54
D-5090 Leverkusen(DE)

(54) **Thermoplastische Formmassen auf Basis Polyphenylenoxid-Polycarbonat-Blockkondensaten.**

(57) Gegenstand der vorliegenden Erfindung sind Formmassen bestehend aus Polypheylenoxid-Polycarbonat-Blockkondensaten, Pfropfpolymerisaten und gegebenenfalls Copolymerisaten. Diese Formmassen können weitere geeignete Zusätze enthalten. Gegenstand der vorliegenden Erfindung ist auch ein Verfahren zur Herstellung der erfindungsgemäßen Formmassen.

EP 0 224 111 A2

0224111

BAYER AKTIENGESELLSCHAFT 5090 Leverkusen, Bayerwerk
Konzernverwaltung RP
Patentabteilung PS/by-c

# Thermoplastische Formmassen auf Basis Polyphenylenoxid-Polycarbonat-Blockkondensaten

Gegenstand der vorliegenden Erfindung sind thermoplastische Formmassen, bestehend aus

A. 20 bis 95 Gew.-Teilen, vorzugsweise 40 bis 85 Gew.-Teilen, bezogen auf 100 Gew.-Teile der Komponenten A + B + C, eines thermoplastischen Polyphenylenoxid-Polycarbonat-Blockkondensats A,

B. 5 bis 50 Gew.-Teilen, bezogen auf 100 Gew.-Teile der Komponenten A + B + C, eines oder mehrerer Pfropfpolymerisate aus

B.1 5 bis 90 Gew.-Teilen, vorzugsweise 30 bis 80 Gew.-Teilen einer Mischung aus

B.1.1 50 bis 100 Gew.-% Styrol, α-Methylstyrol, kernsubstituiertem Styrol, Methylmethacrylat oder Mischungen daraus, und

B.1.2 50 bis 0 Gew.-% (Meth)Acrylnitril, Methylmethacrylat, Maleinsäureanhydrid, N-substituiertem Maleinimid oder Mischungen daraus, auf

B.2 95 bis 10 Gew.-Teile, vorzugsweise 70 bis 20 Gew.-Teile, eines Kautschuks mit einer Glastemperatur $T_g \leq 10^{\circ} C$, und gegebenenfalls

C. 0 bis 50 Gew.-Teilen, bezogen auf 100 Gew.-Teile der Komponenten A + B + C, eines thermoplastischen Copolymerisats aus

C.1 50 bis 100 Gew.-% Styrol, α-Methylstyrol, kernsubstituiertem Styrol, Methylmethacrylat oder Mischungen daraus, und

C.2 50 bis 0 Gew.-% (Meth)Acrylnitril, Methylmethacrylat, Maleinsäureanhydrid, N-substituiertem Maleinimid oder Mischungen daraus,

und/oder gegebenenfalls Stabilisatoren, Pigmenten, Fließmitteln, Entformungsmitteln, Flammschutzmitteln und/oder Antistatika, die dadurch gekennzeichnet sind, daß die Polyphenylenoxid-Polycarbonat-Blockkondensate A 5 bis 40 Gew.-%, vorzugsweise 10 bis 30 Gew.-%, bezogen auf das Gesamtgewicht des Blockkondensats A, monofunktionelle Struktureinheiten der Formel (I. 1.2),

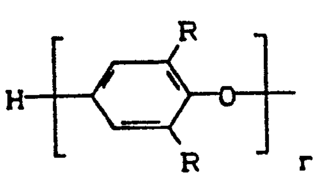

(I.1)

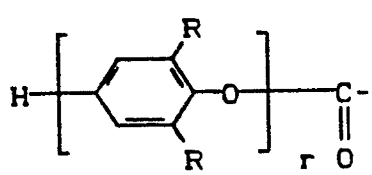

(I.2)

worin R gleich oder verschieden ist und für Wasserstoff

oder einen Alkylrest mit 1 bis 4 C-Atomen steht und "r" für eine ganze Zahl von 1 bis 200 steht, und 95 Gew.-% bis 60 Gew.-%, vorzugsweise 90 Gew.-% bis 70 Gew.-%, bezogen auf das Gesamtgewicht des Blockkondensats A, Struktureinheiten der Formel (II) enthalten,

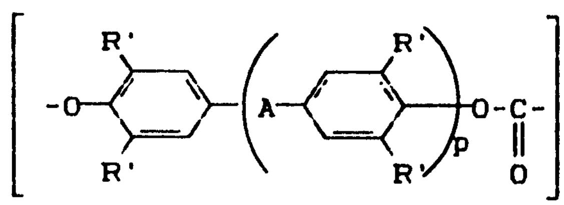 (II),

worin

A eine Einfachbindung, $C_1$-$C_6$-Alkylen, $C_2$-$C_6$-Alkyliden, $C_5$-$C_6$-Cycloalkyliden, $-\underset{\underset{O}{\|}}{C}-$, $-SO_2-$ oder ein Rest der Formel (a)

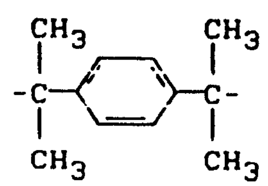 (a)

ist, worin R' gleich oder verschieden und H, Cl oder Br ist und p Null oder 1 ist.

Ein besonders bevorzugter Rest R ist $CH_3$.

Die Komponente A kann auch eine Mischung aus dem Polyphenylenoxid-Polycarbonat-Blockkondensat mit üblichen polyphenylenoxidfreien, thermoplastischen Polycarbonaten sein, wobei der Gesamtgehalt an monofunktionellen Struktureinheiten der Formel (I. 1.2) in dieser Mischung wiederum zwischen 5 Gew.-% und 40 Gew.-%, vorzugsweise zwischen 10 Gew.-% und 30 Gew.-%, bezogen auf Gesamtgewicht der Komponente A aus Polyphenylenoxid-Polycarbonat-Blockkondensat und polyphenylenoxidfreien, thermoplastischen Polycarbonaten, liegt.

Bekannt sind gemäß US-PS 4 446 278 Blockcopolymere von Polyphenylenoxid und sterisch gehinderten aromatischen Polycarbonaten sowie deren Abmischungen mit vinylaromatischen Harzen, wie z.B. schlagzähmodifiziertem Polystyrol. Diese Produkte zeichnen sich durch Beständigkeit gegenüber thermischen und oxidativen Einflüssen aus. Solche Produkte zeigen jedoch wie in US-PS 4 446 278, Tabelle VII, aufgeführt, nur eine ungenügende Zähigkeit. Demgegenüber besitzen die erfindungsgemäßen Formmassen eine gute Kerbschlagzähigkeit sowie gegenüber reinen Polycarbonat/ABS-Mischungen eine deutlich verbesserte Wärmeformbeständigkeit.

Die Komponente A.

Die Herstellung von Polycarbonat-Polyphenylenoxid-Blockkondensaten A mit Struktureinheiten der Formel

(I. 1.2) kann nach dem Phasengrenzflächenverfahren in bekannter Weise aus entsprechenden Polyphenylenoxiden (I a)

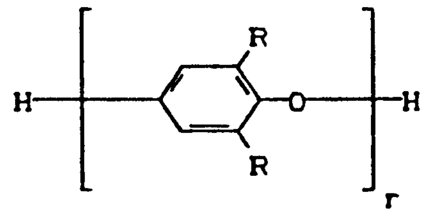

(I a)

worin R und r die für Formel (I) genannte Bedeutung haben, mit den anderen Diphenolen (IIa)

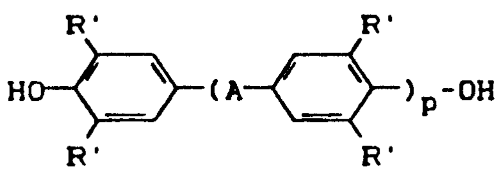

(IIa)

worin A, R' und p die für Formel (II) genannte Bedeutung haben,
Phosgen und gegebenenfalls Verzweigern erfolgen. (Siehe beispielsweise DE-OS 3 211 636).

Die monofunktionellen Polyphenylenoxide (I a) sind literaturbekannt oder nach literaturbekannten Verfahren herstellbar (siehe beispielsweise DE-OS 3 211 636, DE-OS 2 126 434, US-PS 3 306 875 und US-PS 4 028 341). So lassen sich beispielsweise monofunktionelle Polyphenylenoxide der Formel (I a) durch Oxydation von entsprechenden Phenolen (I b)

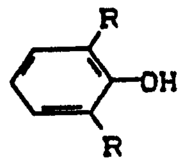

(I b)

mit Sauerstoff (Luft) in Anwesenheit von Katalysatorkombinationen aus Kupfersalzen und tertiären Aminen herstellen.

Die organische Phase des Phasengrenzflächenverfahrens besteht beispielsweise in bekannter Weise aus $CH_2Cl_2$, Chlorbenzol oder deren Gemischen.

Die alkalische wäßrige Phase hat im allgemeinen einen pH-Wert von 8 bis 14, vorzugsweise von 9 bis 13.

Das Volumenverhältnis von organischer zu anorganischer Phase beträgt im allgemeinen 1:6 bis 1:1.

Die Menge an organischer Phase ist im allgemeinen so bemessen, daß das resultierende Block-Polyether-Polycarbonat als 0,5 bis 20 gewichtsprozentige Lösung anfällt.

Die Molmenge an Phosgen beträgt bis zu 150 Mol-%, bezogen auf die Mol-Summe der eingesetzten Diphenolkomponenten.

Als Katalysatoren für das Phasengrenzflächenverfahren sind tertiäre Amine und/oder quartäre Ammoniumsalze und/oder quartäre Phosphoniumsalze in Mengen von 0,01 bis 5 Mol-%, bezogen auf die Mol-Summe der eingesetzten Diphenolkomponenten, geeignet.

Bevorzugte Katalysatoren sind Triethylamin, Tetrabutylammoniumbromid und N-Ethylpiperidin.

Die Polycarbonat-Polyphenylenoxid-Blockkondensate A mit Struktureinheiten der Formel (I.1.2) haben in der Regel relative Lösungsviskositäten von 0,8 bis 2, insbesondere von 1.2 bis 1.5, gemessen an einer Lösung von 0,5 g Substanz in 100 ml $CH_2Cl_2$-Lösung.

Die Verarbeitung dieser Blockkondensate mit Struktureinheiten (I .1.2) kann auf handelsüblichen Maschinen durch Spritzgießen oder Extrusion erfolgen.

Die einzusetzenden monofunktionellen Polyphenylenoxide der Formel (I a) besitzen mittlere Zahlenmittel-Molekulargewichte $\bar{M}n$ von 500 bis 10 000, vorzugsweise von 800 bis 3000 wobei $\bar{M}n$ nach der osmometrischen Methode in $CH_2Cl_2$ als Lösungsmittel gemessen werden kann.

Die Diphenole der Formel (IIa) sind entweder literaturbekannt oder nach literaturbekannten Verfahren herstellbar.

Geeignte Diphenole der Formel (IIa) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dichlor-4-hydroxyphenyl)-propan und 2,2-Bis-(3,5-dibrom-4-hydroxyphenyl)-propan.

Bevorzugte Diphenole der Formel (IIa) sind 2,2-Bis-(4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Geeignete Verzweiger zur Herstellung der Blockkondensate mit Struktureinheiten der Formel (I.1,2) sind solche mit drei oder mehr als drei funktionellen Gruppen; wobei als funktionelle Gruppen vorzugsweise aromatische Carbonylchlorid-oder phenolische OH-Gruppen geeignet sind.

Beispiele für Verzweiger sind Trimesinsäuretrichlorid, Cyanursäuretrichlorid, 3,3', 4,4'-Benzophenon-tetracarbonsäuretetrachlorid, 1,4,5,8-Naphthalintetracarbonsäuretetrachlorid, Pyromellithsäuretetrachlorid, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxy-phenyl)-cyclohexyl]-propan, 2,4-Bis-(4-hydroxyphenyl-isopropyl)-phenol, Tetra-(4-hydroxyphenyl)-methan, 2,6-Bis-(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan und 1,4-Bis-[(4,4"-dihydroxytriphenyl)-methyl]-benzol.

Der Einbau von Verzweigern in Polycarbonate, auch in segmentierte Polyether-Polycarbonate nach dem Phasengrenzflächenverfahren ist bekannt (siehe dazu DE-OS 15 70 533, US-RE 27 682, DE-OS 26 36 784 (Le A 17 025) und DE-OS 27 26 376 (Le A 18 015)).

Anstelle der Diphenole gemäß Formel (IIa) können auch Bischlorkohlensäureester von Oligocarbonaten der Diphenole gemäß Formel (IIa) eingesetzt werden, wobei "Oligo" hier einen Polymerisationsgrad von 2 bis 10 bedeuten soll.

Die Komponente B.

Zur Herstellung der Pfropfpolymerisate gemäß Komponente B. geeignete Kautschuke sind insbesondere Polybutadien, Butadien/Styrol-Copolymerisate mit bis zu 30 Gew.-%, bezogen auf Kautschukgewicht, eines niederen Alkylesters von Acryl- oder Methacrylsäure (beispielsweise Methylmethacrylat, Ethylacrylat, Methylacrylat oder Ethylmethacrylat). Weitere geeignete Kautschuke sind beispielsweise Polyisopren oder Polychloropren. Geeignet sind weiterhin Alkylacrylatkautschuke auf der Basis von $C_1$-$C_8$-Alkylacrylaten, insbesondere Ethyl-, Butyl-, Ethylhexylacrylat. Diese Alkylacrylatkautschuke können gegebenenfalls bis zu 30 Gew.-%, bezogen auf Kautschukgewicht, Monomere wie Vinylacetat, Acrylnitril, Styrol, Methylmethacrylat und/oder Vinylether copolymerisiert enthalten. Diese Alkylacrylatkautschuke können weiterhin kleinere Mengen, vorzugsweise bis zu 5 Gew.-%, bezogen auf Kautschukgewicht, vernetzend wirkender ethylenisch ungesättigter Monomere enthalten. Solche Vernetzer sind z.B. Alkylendioldi(meth)-acrylate, Polyesterdi-(meth)-acrylate, Divinylbenzol, Tri-vinylbenzol, Triallylcyanurat, Allyl-(meth)acrylat, Butadien oder Isopren. Solche Alkylacrylate sind bekannt. Acrylatkautschuke als Pfropfgrundlage können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten. Andere geeignete Kautschuke sind z.B. EPDM-Kautschuke, also Kautschuke aus Ethylen, Propylen und einem unkonjugierten Dienmonomer.

Bevorzugte Kautschuke zur Herstellung der Pfropfpolymerisate B sind Dienmonomer- und Alkylacrylatkautschuke.

Die Kautschuke liegen in den Pfropfpolymerisaten B in Form wenigstens partiell vernetzter Teilchen einer mittleren Teilchengröße von 0,09 bis 5 µm, insbesondere 0,1 bis 1 µm vor. Die Pfropfpolymerisate B werden durch radikalische Pfropfcopolymerisation der eingangs definierten Monomerengemische aus B.1.1 und B.1.2 in Gegenwart der zu pfropfenden Kautschuke B.2 hergestellt und sind durchweg bekannt. Bevorzugte Herstellungsverfahren für die Pfropfpolymerisate B sind Emulsions-, Lösungs-, Masse- oder Suspensionspolymerisation. Besonders bevorzugte Pfropfpolymerisate B sind die sogenannten ABS-Polymerisate. Als kernsubstituierte Styrole seien Halogenstyrol und p-Methylstyrol erwähnt.

0224111

Die Komponente C.

Bevorzugte Copolymerisate gemäß Komponente C sind solche aus wenigstens einem Monomeren aus der Reihe Styrol, α-Methylstyrol, Halogenstyrol gemäß C.1 mit gegebenenfalls einem Monomeren aus der Reihe Acrylnitril, Methacrylnitril, Methylmethacrylat, Maleinsäureanhydrid gemäß C.2.

Copolymerisate gemäß Komponente C entstehen häufig bei der Pfropfpolymerisation zur Herstellung der Komponente B als Nebenprodukte, besonders dann, wenn große Mengen Monomere auf kleine Mengen Kautschuk gepfropft werden.

Die erfindungsgemäß einzusetzende Menge an Copolymerisat C von 0 bis 50 Gew.-Teilen, bezogen auf 100 Gew.-Teile aus A + B + C bezieht diese Nebenprodukte aus der Pfropfpolymerisation nicht mit ein.

Die Copolymerisate gemäß Komponente C sind harzartig, thermoplastisch und kautschukfrei. Besonders bevorzugte Copolymerisate C sind solche aus Styrol mit Acrylnitril und gegebenenfalls mit Methylmethacrylat, aus α-Methylstyrol mit Acrylnitril und gegebenenfalls mit Methylmethacrylat oder aus Styrol und α-Methylstyrol mit Acrylnitril und gegebenenfalls mit Methylmethacrylat bzw. solche nur aus Styrol.

Besonders bevorzugte Gewichtsverhältnisse im thermoplastischen Copolymerisat C sind 60 bis 80 Gew.-% C.1 und 40 bis 20 Gew.-% C.2 bzw. 100 Gew.-% C.1.

Die Copolymerisate gemäß Komponente C sind bekannt und lassen sich durch radikalische Polymerisation, insbesondere durch Emulsions-, Suspensions-, Lösungs- oder Massepolymerisation herstellen. Die Copolymerisate gemäß Komponente C besitzen vorzugsweise Molekulargewichte $\bar{M}w$ (Gewichtsmittel, ermittelt durch Lichtstreuung oder Sedimentation) zwischen 15 000 und 200 000.

Die erfindungsgemäßen Formmassen können weitere für Polyether, für Polycarbonate oder für ABS-Polymerisate geeignete Zusätze, wie Stabilisatoren, Pigmente, Fließmittel, Entformungsmittel, Flammschutzmittel und/oder Antistatika enthalten.

Bevorzugte Stabilisatoren sind beispielsweise substituierte Benzophenone oder Benztriazole bzw. Phosphite gemäß EP-OS 0 023 291 bzw. phenolische Antioxidantien.

Bevorzugte Entformungsmittel sind beispielsweise Ester von einwertigen, langkettigen gesättigten Alkoholen und langkettigen gesättigten Fettsäuren oder von mehrwertigen gesättigten Alkoholen mit langkettigen Fettsäuren, beispielsweise Pentaerythrittetrastearat, Trimethylolpropantristearat, Glycerintristearat und Stearylstearat.

Geeignete Flammschutzmittel sind beispielsweise Polyhalogendiphenyl, Polyhalogendiphenylether, Polyhalogenphthalsäure und ihre Derivate und Polyhalogenoligo- und-polycarbonate, wobei die entsprechenden Bromverbindungen besonders wirksam sind. Außerdem enthalten sie in der Regel einen Synergisten, z.B. Antimontrioxid.

Bevorzugte Flammschutzmittel sind phosphorhaltige organische Verbindungen wie Triphenylphosphat, Diphenylkresylphosphat, Tris-(2,3-dibrompropyl)-phosphat, Methanphosphonsäure-diphenylester und Phenylphosphonsäurediphenylester, wobei zusätzlich Mittel, die das Abtropfen unterdrücken, wie Polytetrafluorethylene, eingesetzt werden können, und wobei gegebenenfalls zusätzlich organische Bromverbindungen kombiniert werden können, sei es via Bromsubstitution in den Komponenten A, B und/oder C oder durch Zusatz der vorstehend genannten bromhaltigen Flammschutzmittel.

Besonders bevorzugte Flammschutzmittel sind Triphenylphosphat, Diphenylkresylphosphat und Methanphosphonsäurediphenylester gegebenenfalls in Kombination mit Polytetrafluorethylen.

Gegenstand der vorliegenden Erfindung sind somit außerdem thermoplastische Formmassen enthaltend die Komponenten A, B und gegebenenfalls C, die dadurch gekennzeichnet sind, daß sie Flammschutzmittel auf Basis phosphorhaltiger organischer Verbindungen, gegebenenfalls in Kombination mit Polytetrafluorethylenen und gegebenenfalls organischen Bromverbindungen, enthalten.

Die erfindungsgemäßen Formmassen, bestehend aus den Komponenten A, B und gegebenenfalls C und/oder gegebenenfalls weiteren bekannten Zusätzen wie Stabilisatoren, Pigmenten, Fließmitteln, Entformungsmitteln, Flammschutzmitteln und/oder Antistatika, werden hergestellt, indem man die jeweiligen Bestandteile in bekannter Weise vermischt und bei Temperaturen von 200°C bis 330°C in üblichen Aggregaten wie Innenknetern, Extrudern oder Doppelwellenschnecken schmelzcompoundiert oder schmelzextrudiert.

Gegenstand der vorliegenden Erfindung ist somit auch ein Verfahren zur Herstellung von thermoplastischen Formmassen, bestehend aus den Komponenten A, B und gegebenenfalls der Komponente C, Stabilisatoren, Pigmenten, Fließmitteln, Entformungsmitteln, Flammschutzmitteln und/oder Antistatika, das dadurch gekennzeichnet ist, daß man die Komponenten A, B und gegebenenfalls die Komponente C, Stabilisatoren, Pigmente, Fließmittel, Entformungsmittel, Flammschutzmittel und/oder Antistatika in bekannter Weise sukzessive oder simultan vermischt und danach bei Temperaturen von 200° C bis 330° C in gebräuchlichen Aggregaten schmelzcompoundiert oder schmelzextrudiert.

Gegenstand der vorliegenden Erfindung ist auch ein Verfahren zur Herstellung von thermoplastischen Formmassen enthaltend die Komponente A, B, gegebenenfalls C, und Flammschutzmittel, das dadurch gekennzeichnet ist, daß man die einzelnen Bestandteile in bekannter Weise sukzessive oder simultan vermischt und danach bei Temperaturen von 200° C bis 330° C in gebräuchlichen Aggregaten schmelzcompoundiert oder schmelzextrudiert, und daß man als Flammschutzmittel solche auf Basis phosphorhaltiger organicher Verbindungen, gegebenenfalls in Kombination mit Polytetrafluorethylenen und gegebenenfalls organischen Bromverbindungen einsetzt.

Die Vermischung der einzelnen Bestandteile kann in bekannter Weise sowohl bei etwa 20° C (Raumtemperatur) als auch bei höherer Temperatur erfolgen.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art (z.B. für Haushaltsgeräte wie Saftpressen, Kaffeemaschinen, Mixer) oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Eine weitere Form der Verarbeitung ist die Herstellung von Formkörpern durch Tiefziehen aus vorher hergestellten Platten oder Folien.

Teilchengröße bedeutet immer mittlerer Teilchendurchmesser $d_{50}$, ermittelt durch Ultrazentrifugenmessungen nach W. Scholtan et al., Kolloid-Z. und Z. Polymere 250 (1972) Seiten 782-796.

## Beispiele

Herstellung der erfindungsgemäßen Polyphenylenoxid-Polycarbonat-Blockcopolymeren

### I. Herstellung einer monofunktionellen Polyphenylenoxidkomponente

30 g CuCl und 30 g 4-Dimethylaminopyridin werden in 1 l Chlorbenzol dispergiert bzw. gelöst. Danach wird 30 min Luft (100 l/h) durch die Lösung geleitet. Es wird danach eine Lösung von 1 kg 2,6-Dimethylphenol in 9 l Chlorbenzol zugegeben, während weiterhin Luft eingeleitet wird. Die Reaktionstemperatur steigt hierbei von 20° C auf ca. 32° C. Die Reaktion wird abgebrochen, wenn der OH-Gehalt im gelösten organischen Feststoff 1,0 Gew.-% beträgt (IR-spektroskopische Bestimmung nach Eichkurve), was einem mittleren Molekulargewicht $\bar{M}n$ von 1700 entspricht.

### II. Herstellung eines Polyphenylenoxid-Polycarbonat-Blockcopolymeren A 1)

1368 g (6 Mol) Bisphenol A wurden mit 1920 g (48 Mol) NaOH in 50 l Wasser gelöst. Nach Zugabe einer Lösung von 340 g des monofunktionellen Polyphenylenoxids I in 12 l Chlorbenzol und 14 l Dichlormethan wurden bei 22° C innerhalb 50 min unter heftigem Rühren 1,4 kg (14,14 Mol) Phosgen bei pH 13 bis 14 eingeleitet. Nach Zugabe von 36 ml N-Ethylpiperidin erforderte die Nachreaktion, weiterhin unter heftigem Rühren, bei 20-25° C und pH 13, 1 Stunde.

Zur Aufarbeitung wurden die Phasen getrennt, die organische Phase angesäuert, elektrolytfrei gewaschen und das Dichlormethan abdestilliert. Die Verdampfung des Chlorbenzols erfolgte in einem Doppelwellenschneckenextruder im Vakuum bei 310° C. Die relative Lösungsviskosität gemessen in Dichlormethan bei 23° C und einer Konzentration von 0,5 % betrug 1,280.

A.2

Polycarbonat aus 2,2-Bis-(4-hydroxyphenyl)-propan (Bisphenol A) mit einer relativen Lösungsviskosität von 1,26 bis 1,28, gemessen in Methylenchlorid bei 23° C und einer Konzentration von 0,5 Gew.-%.

B.

SAN-Pfropfpolymerisat von 50 Gew.-% Styrol-Acrylnitril-Gemisch (im Gew.-Verhältnis von 72:28) und 50 % teilchenförmigem Polybutadien einer mittleren Teilchengröße ($d_{50}$) von 0,4 µm, erhalten durch Emulsionspolymerisation.

C.1

Styrol-Acrylnitril-Copolymerisat mit einem Styrol-Acrylnitril-Verhältnis von 72:28 und einer Grenzviskosität [η] = 0,55 dl/g (Messung in Dimethylformamid bei 20° C).

C.2

Handelsübliches Polystyrol der Firma BASF mit der Bezeichnung Polystyrol 168 N.

In der folgenden Tabelle sind die Zusammensetzungen sowie die erhaltenen Prüfdaten aufgeführt.

Herstellung der erfindungsgemäßen Formmassen

Die Compoundierung der Komponenten A, B und C erfolgte auf einem 1,3-l-Innenkneter bei einer Temperatur von 200-230° C.

Die Herstellung von Formkörpern erfolgte auf einer Spritzgußmaschine bei 260° C.

Die Bestimmung der Kerbschlagzähigkeit erfolgte in Anlehnung an DIN 53 453/ISO R 179 an Stäben der Abmessung 50 x 6 x 4 mm, wobei die Stäbe mit einer V-förmigen Kerbe der Kerbtiefe 2,7 mm versehen wurden.

Die Bestimmung der Wärmeformbeständigkeit nach Vicat erfolgte gemäß DIN 53 460.

| | A 1 | A 2 | B | C 1 | C 2 | Kerbschlag-zähigkeit kJ/$m^2$ | Wärmeformbe-ständigkeit °C |
|---|---|---|---|---|---|---|---|
| | Gewichts-Teilen | | | | | | |
| erfindungsgemäße Versuche | 60 | | 24 | 16 | | 47,9 | 123 |
| | 60 | | 24 | | 16 | 55,8 | 132 |
| Vergleichsversuche | | 60 | 24 | 16 | | 35 | 121 |

## Patentansprüche

1. Thermoplastische Formmassen bestehend aus

A. 20 bis 95 Gew.-Teilen, bezogen auf 100 Gew.-Teile der Komponenten A + B + C, eines thermoplastischen Polyphenylenoxid-Polycarbonat-Blockkondensats A,

B. 5 bis 50 Gew.-Teilen, bezogen auf 100 Gew.-Teile der Komponenten A + B + C, eines oder mehrerer Pfropfpolymerisate aus

B.1 5 bis 90 Gew.-Teilen einer Mischung aus

B.1.1 50 bis 100 Gew.-% Styrol, α-Methylstyrol, kernsubstituiertem Styrol, Methylmethacrylat oder Mischungen daraus, und

B.1.2 50 bis 0 Gew.-% (Meth)Acrylnitril, Methylmethacrylat, Maleinsäureanhydrid, N-substituiertem Maleinimid oder Mischungen daraus, auf

B.2 95 bis 10 Gew.-Teile eines Kautschuks mit einer Glastemperatur $T_G \leq 10^0 C$ und gegebenenfalls

C. 0 bis 50 Gew.-Teilen, bezogen auf 100 Gew.-Teile der Komponenten A + B + C, eines thermoplastischen Copolymerisats aus

C.1 50 bis 100 Gew.-% Styrol, α-Methylstyrol, kernsubstituiertem Styrol, Methylmethacrylat oder Mischungen daraus, und

C.2 50 bis 0 Gew.-% (Meth)Acrylnitril, Methylmethacrylat, Maleinsäureanhydrid, N-substituiertem Maleinimid oder Mischungen daraus,

dadurch gekennzeichnet, daß die Polyphenylenoxid-Polycarbonat-Blockkondensate A 5 Gew.-% bis 40 Gew.-%, bezogen auf das Gesamtgewicht des Blockkondensats A, monofunktionelle Struktureinheiten der Formel (I.1,2),

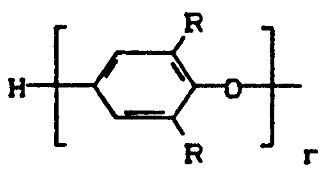

(I.1)

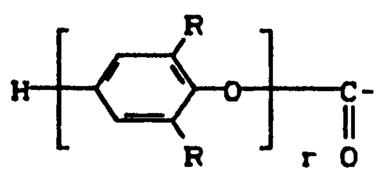

(I.2)

worin R gleich oder verschieden ist und für Wasserstoff oder einen Alkylrest mit 1 bis 4 C-Atomen steht und "r" für eine ganze Zahl von 1 bis 200 steht, und 95 Gew.-% bis 60 Gew.-%, bezogen auf das Gesamtgewicht des Blockkondensats A, Struktureinheiten der Formel (II) enthalten,

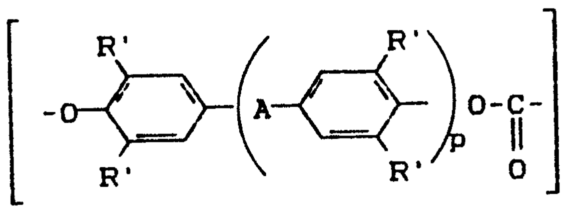

(II),

worin

A eine Einfachbindung, $C_1$-$C_6$-Alkylen, $C_2$-$C_6$-Alkyliden, $C_5$-$C_6$-Cycloalkyliden, $-\underset{\underset{O}{\|}}{C}-$, $-SO_2-$ oder ein Rest der Formel (a)

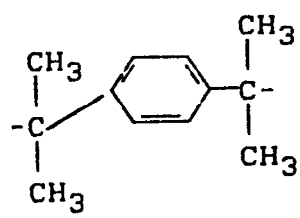

(a)

ist, worin R' gleich oder verschieden und H, Cl oder Br ist und p Null oder 1 ist.

2. Formmassen gemäß Anspruch 1, dadurch gekennzeichnet, daß R in Formel (I.1.2) $CH_3$ ist.

3. Formmassen gemäß Ansprüche 1 und 2, dadurch gekennzeichnet, daß die Komponente A eine Mischung aus dem Polyphenylenoxid-Polycarbonat-Blockkondensat des Anspruchs 1 mit üblichen polyphenylenoxidfreien thermoplastischen Polycarbonaten ist, wobei der Gesamtgehalt an Polyphenylenetherblöcken in dieser Mischung

zwischen 5 Gew.% und 40 Gew.%, bezogen auf Gesamtgewicht der Komponente A aus Polyphenylenoxid-Polycarbonat-Blockkondensat und polyphenylenoxidfreien thermoplastischen Polycarbonaten, liegt.

4. Formmassen gemäß Ansprüche 1 bis 3, dadurch gekennzeichnet, daß die Komponente A 10 Gew.-% bis 30 Gew.-% monofunktionelle Struktureinheiten der Formel (I.1.2) und 90 Gew.-% bis 70 Gew.-% Struktureinheiten der Formel (II) enthält.

5. Formmassen gemäß Ansprüche 1 bis 4, dadurch gekennzeichnet, daß sie aus zusätzlich mindestens einem Zusatz, ausgewählt aus der Gruppe der Stabilisatoren, Pigmente, Fließmittel, Entformungsmittel, Flammschutzmittel und Antistatika bestehen.

6. Thermoplastische Formmassen enthaltend

A. 20 bis 95 Gew.-Teile, bezogen auf 100 Gew.-Teile der Komponenten A + B + C, der Komponente A gemäß Ansprüche 1 bis 4,

B. 5 bis 50 Gew.-Teile, bezogen auf 100 Gew.-Teile der Komponenten A + B + C, der Komponente B gemäß Anspruch 1 und gegebenenfalls

C. 0 bis 50 Gew.-Teile, bezogen auf 100 Gew.-Teile der Komponenten A+B+C, der Komponente C gemäß Anspruch 1, dadurch gekennzeichnet, daß sie Flammschutzmittel auf Basis phosphorhaltiger

organischer Verbindungen, gegebenenfalls in Kombination mit Polytetrafluorethylenen und gegebenenfalls organischen Bromverbindungen enthalten.

7. Verfahren zur Herstellung der Formmassen gemäß Ansprüche 1 bis 4, dadurch gekennzeichnet, daß man die Komponenten A, B und gegebenenfalls C in bekannter Weise vermischt und danach bei Temperaturen von 200°C bis 330°C in gebräuchlichen Aggregaten schmelzcompoundiert oder schmelzextrudiert.

8. Verfahren gemäß Anspruch 7, zur Herstellung der Formmassen des Anspruchs 5, dadurch gekennzeichnet, daß man mindestens einen Zusatz, ausgewählt aus der Gruppe der Stabilisatoren, Pigmente, Fließmittel, Entformungsmittel, Flammschutzmittel und Antistatika einbezieht.

9. Verfahren gemäß Anspruch 7, zur Herstellung der Formmassen des Anspruchs 6, dadurch gekennzeichnet, daß man Flammschutzmittel auf Basis phosphorhaltiger organischer Verbindungen, gegebenenfalls in Kombination mit Polytetrafluorethylenen und gegebenenfalls organischen Bromverbindungen einbezieht.